# EUROPÄISCHE PATENTSCHRIFT

(11) **EP 0 843 422 B1**
(45) Veröffentlichungstag und Bekanntmachung des Hinweises auf die Patenterteilung: **13.09.2006**
(21) Anmeldenummer: 97111899.7
(22) Anmeldetag: 12.07.1997
(51) Int. Cl.: H04B 7/26, H04B 1/66, H04L 5/06, H04L 1/00, H04B 7/12

(54) **Verfahren und Anordnung zum Verbessern der Übertragungsqualität in einem Punkt-zu-Mehrpunkt Funkübertragungssystem**
Method and arrangement for improving the transmission quality in a point-to-multipoint radio transmission system
Procédé et dispositif pour l'amélioration de la qualité de transmissions dans un système de transmission radio du type point-to-multipoint

(30) Priorität: 09.11.1996 DE 19646371
(43) Veröffentlichungstag der Anmeldung: 20.05.1998
(73) Patentinhaber: Marconi Communications GmbH, 71522 Backnang (DE)
(72) Erfinder: Glauner, Martin, 73630 Remshalden (DE); Eckstein, Tillmann, 71409 Schwaikheim (DE); Bollmann, Andreas, 54439 Esingen (DE)
(74) Vertreter: Manitz, Finsterwald & Partner GbR

(56) Entgegenhaltungen:
- WO-A-95/10144
- US-A- 5 345 600
- OTSUKI S ET AL: "PERFORMANCE OF MODULATION-LEVEL-CONTROLLED ADAPTIVE MODULATION SYSTEMS" ELECTRONICS & COMMUNICATIONS IN JAPAN, PART I - COMMUNICATIONS,US,SCRIPTA TECHNICA. NEW YORK, Bd. 79, Nr. 7, 1. Juli 1996 (1996-07-01), Seiten 81-93, XP000696376 ISSN: 8756-6621
- SAMPEI S ET AL: "ADAPTIVE MODULATION/TDMA SCHEME FOR PERSONAL MULTI-MEDIA COMMUNICATION SYSTEMS" PROCEEDINGS OF THE GLOBAL TELECOMMUNICATIONS CONFERENCE (GLOBECOM),US,NEW YORK, IEEE, 28. November 1994 (1994-11-28), Seiten 989-993, XP000488685 ISBN: 0-7803-1821-8
- PATENT ABSTRACTS OF JAPAN vol. 017, no. 508 (E-1431), 13. September 1993 (1993-09-13) & JP 05 130082 A (NEC CORP), 25. Mai 1993 (1993-05-25) & US 5 577 087 A (FURUYA) 19. November 1996 (1996-11-19)

## Beschreibung

### Stand der Technik

Die vorliegende Erfindung betrifft ein Verfahren und eine Anordnung zum Verbessern der Übertragungsqualität in einem Punkt-zu-Mehrpunkt Funkübertragungssystem, bestehend aus mindestens einer Basisstation und mehreren Teilnehmerstationen, wobei die zu einer jeden Basisstation gehörende Funkzelle aus einem oder mehreren Sektoren besteht und die Basisstation für jeden einzelnen Sektor eine Sende-/Empfangseinrichtung aufweist, zwischen der und den in dem Sektor vorhandenen Teilnehmerstationen Datenaustausch stattfinden kann. Ein derartiges Punkt-zu-Mehrpunktfunkübertragungssystem ist z.B. aus der DE 44 26 183 C1 bekannt.

Funkübertragungssysteme, seien es terrestrische Richtfunksysteme oder Satellitenübertragungssysteme, erlauben es, neue Funkverbindungen sehr schnell zu installieren oder bestehende zu ergänzen. Bei solchen Funkübertragungssystemen soll das zur Verfügung stehende Frequenzspektrum möglichst optimal ausgenutzt werden. Bei einem Punkt-zu-Mehrpunktrichtfunksystem gemäß der DE 44 26 183 C1 wird die Übertragungskapazität dadurch flexibel an den Bedarf der Teilnehmer angepaßt, daß die Bandbreite der einzelnen Übertragungskanäle auf die von den einzelnen Teilnehmern jeweils geforderte Datenübertragungsrate eingestellt wird. Hier ist auch eine veränderbare Einstellung des Modulationsverfahrens (z.B. N-PSK, mit N = 4 ... 16 oder M-QAM mit M = 4 ... 256) auf den einzelnen Übertragungskanälen vorgesehen.

Um eine möglichst hohe Übertragungsqualität in einem Funkübertragungssystem zu gewährleisten, sollen im System störende Interferenzen möglichst vermieden werden. Dazu werden schon bei der Funkfeldplanung geographische Gegebenheiten berücksichtigt, welche Interferenzen verursachen könnten. Bei einer Basisstation oder einer Teilnehmerstation können Interferenzen durch Reflexionen des selbst ausgesendeten Signals entstehen, wobei es zu Pegelverlusten bis hin zur Auslöschung des eigenen Signals kommen kann. Auch können sich bei einer Teilnehmerstation oder Basisstation Signale aus benachbarten Funkzellen interferierend auswirken. Durch Funkfeldberechnungen während der Planungsphase eines Funkübertragungssystems lassen sich im allgemeinen Interferenzen nicht genau genug vorherbestimmen. Das trifft vor allem dann zu, wenn es während des Betriebs des Funkübertragungssystems zu Änderungen der Geländestruktur, der Vegetation oder der Bebauung kommt, oder das Funknetz ergänzt oder abgeändert wird.

In der Veröffentlichung von Otsuki, S. et al.: "Performance of Modulation-Level-Controlled Adaptive Modulation Systems" in Electronics and Communications in Japan, Part 1, Vol. 79, No. 7, 1996, Seiten 81 bis 93, Scripta Technica, Inc., ISSN 8756-6621 ist ein adaptives Modulationssystem für Mobilfunk beschrieben, in dem die Anzahl der Modulationsniveaus bei mehrwertiger Quadratur-Amplituden-Modulation entsprechend den Bedingungen auf einem gegebenen Kanal angepasst wird. Das vorgeschlagene System verwendet TDMA, wobei die Anzahl der Modulationsniveaus für jeden Burst variabel ist. Zur Beurteilung der Übertragungsbedingung werden Schätzungen für den augenblicklichen Signal-Rausch-Abstand C/No und die Laufzeit- bzw. Verzögerungsaufspreizung durch Mehrwege-Ausbreitung verwendet.

In WO 95/10144 ist ein Mehr-Benutzersystem beschrieben, das Funkkanäle umfasst, die für verschiedene Benutzer unabhängig und unkorreliert sind. Das System arbeitet mit Frequenzen, die aufgrund von Mehrwege-ausbreitung für einen Benutzer mehr oder weniger gedämpft, für einen anderen Benutzer jedoch mehr oder weniger verstärkt sind. Es sind Einrichtungen vorgesehen, die eine Dämpfung oder Verstärkung für die verschiedenen Frequenzen detektieren bzw. messen. Die Einrichtungen verhindern auch eine Signal- oder Informationsübertragung bei Frequenzen, bei denen die Dämpfung einen vorgegebenen Wert überschreitet, indem die entsprechende Frequenz oder die entsprechenden Frequenzen nicht verwendet wird bzw. werden und stattdessen eine entsprechende Anzahl von Frequenzen mit einer hinreichend geringen Dämpfung eingesetzt werden.

Der Erfindung liegt daher die Aufgabe zugrunde, ein Verfahren und eine Anordnung der eingangs genannten Art anzugeben, womit ohne großen Aufwand zu gegebenen Zeiten eine Interferenzanalyse im Funkübertragungssystem durchgeführt und in Abhängigkeit davon durch Änderung entsprechender Funkfeldparameter die Übertragungsqualität verbessert werden kann.

### Vorteile der Erfindung

Bei einem Funkübertragungssystem, das aus mindestens einer Basisstation und mehreren Teilnehmerstationen besteht, wobei die zu einer jeden Basisstation gehörende Funkzelle aus ein oder mehreren Sektoren besteht, wird die Aufgabe gemäß den Merkmalen des Patentanspruchs 1 durch folgende Maßnahmen gelöst. Zwischen jeder Teilnehmerstation und den Sende-/Empfangseinrichtungen all derjenigen Sektoren, die Interferenzen bei der betreffenden Teilnehmerstation verursachen können, wird ein Testkanal übertragen. Für jeden Signalpfad zwischen den einzelnen Teilnehmerstationen und Sektoren wird aus der Sende- und der Empfangsleistung des Testkanals die Dämpfung ermittelt. Dann wird für jede Teilnehmerstation aus allen dazu ermittelten Signal-Dämpfungen und realistischen Annahmen über die Sendeleistung der störenden Signale ein Träger-Störabstand bestimmt. Schließlich wird, wenn der Träger-Störabstand für eine Teilnehmerstation unterhalb einer vorgebbaren Schwelle liegt, die Modulation für das zwischen der betreffenden Teilnehmerstation und dem zugehörigen Sektor übertragene Datensignal in eine robustere Modulationsart verändert und/oder zumindest bei dem Sektor, der die größte Interferenz für die betreffende Teilnehmerstation verursacht, der Sendesignalträger auf einen anderen Frequenzkanal umgeschaltet.

Diese Interferenzanalyse und die daraus abgeleitete Verbesserung der Übertragungsqualität kann das Funkübertragungssystem eigenständig durchführen. Es handelt sich dabei um ein adaptives Verfahren, das eine optimale Unterdrückung von Interferenzen bewirkt.

Gemäß einem Unteranspruch wird auch für jeden Sektor aus allen dazu gehörenden Signalpfad-Dämpfungen ein Träger-Störabstand bestimmt und wenn der Träger-Störabstand für einen Sektor unterhalb einer vorgebbaren Schwelle liegt, zumindestens bei der Teilnehmerstation, welche die größte Interferenz für den betreffenden Sektor verursacht, die Sendeleistung reduziert und/oder der Sendesignalträger auf einen anderen Frequenzkanal umgeschaltet.

Gemäß weiterer Unteransprüche enthält der Testkanal eine Kennung des ihn aussendenden Sektors oder der ihn aussendenden Teilnehmerstation und eine Information über die Sendeleistung. Außerdem kann der Testkanal von den einzelnen Sektoren oder Teilnehmerstationen in einem vorgebbaren festen Zeitraster ausgesendet werden. Das ist dann sinnvoll, wenn der Testkanal für einige Teilnehmerstationen oder Sektoren so stark gedämpft ist, daß er dort nicht mehr demoduliert werden kann. Zweckmäßigerweise werden die Signalpfad-Dämpfungen von einer zentralen Steuereinheit ermittelt und in einer Dämpfungsmatrix abgelegt. Von der zentralen Steuereinheit können die Träger-Störabstände berechnet und dieser der Schwellwertentscheidung unterzogen werden. Die sich aus der Interferenzanalyse ergebende Verteilung der Frequenzkanäle für die einzelnen Signalpfade zwischen den Teilnehmerstationen und den ihnen zugehörigen Sektoren kann die Steuereinheit in einer Frequenzkanalmatrix ablegen.

Im Falle von frequenzselektiven Fadings ist es sinnvoll, daß der Testkanal zwischen den Teilnehmerstationen und Sektoren wiederholt mit anderen Trägerfrequenzen übertragen wird.

Das beanspruchte Verfahren kann nach jeder Neuinstallation einer Teilnehmerstation oder nach einer Veränderung der Bebauung oder der Vegetation in den Funkzellen oder periodisch wiederholt werden.

Beschreibung eines Ausführungsbeispiels Anhand eines in der Zeichung dargestellten Ausführungsbeispiels wird nachfolgend die Erfindung näher erläutert. Es zeigen:
Figur 1 ein Punkt-zu-Mehrpunktübertragungssystem mit zwei Funkzellen,
Figur 2 eine Matrix für Signalpfad-Dämpfungen und
Figur 3 ein Ablaufdiagramm für die Steuerung der Interferenzanalyse des Funkübertragungssystems.

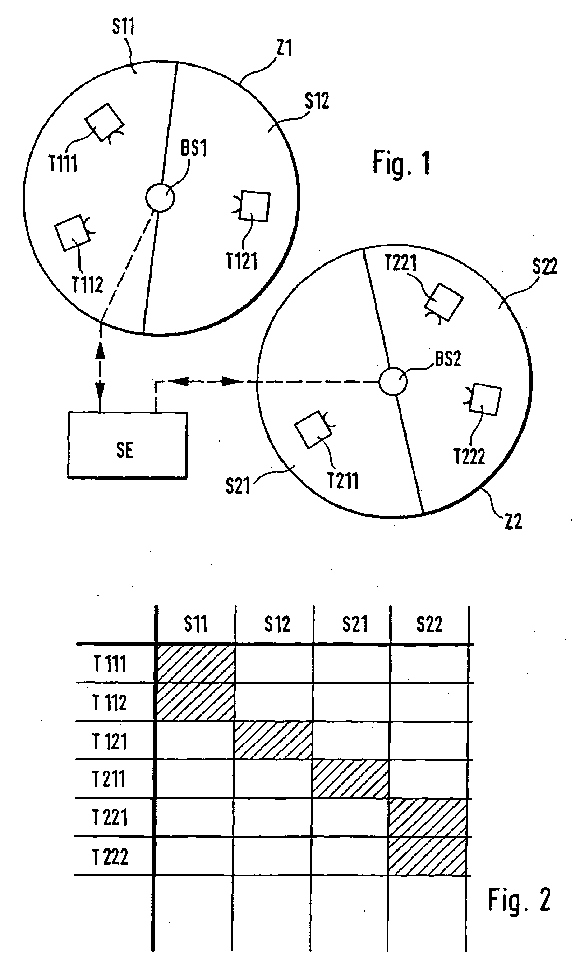

Die Figur 1 stellt schematisch ein Punkt-zu-Mehrpunkt Funkübertragungssystem dar mit beispielsweise zwei Funkzellen Z1 und Z2. In jeder Funkzelle Z1, Z2 befindet sich eine Basisstation BS1, BS2. Außerdem ist jede Funkzelle Z1 und Z2 in mindestens zwei Sektoren S11, S12 und S21, S22 aufgeteilt. Die Funkzellen brauchen aber nicht wie hier vielfach sektorisiert zu sein. Eine Funkzelle, die nicht in mehrere Sektoren unterteilt ist, ist eine Funkzelle mit nur einem Sektor. Die mehrfache Sektorisierung der Funkzellen entsteht dadurch, daß die Basisstationen BS1 und BS2 sektorisiert strahlende Antennen aufweisen, so daß die Basisstationen BS1 und BS2 unabhängig voneinander mit in den einzelnen Sektoren installierten Teilnehmerstationen T111, T112, T121 und T211, T221, T222 kommunizieren können. Im Sektor S11 befinden sich die Teilnehmerstationen T111 und T112, im Sektor S12 die Teilnehmerstation T121, im Sektor S21 die Teilnehmerstation T211 und im Sektor S22 die Teilnehmerstationen T221 und T222. In der Realität können die Funkzellen in mehr als nur zwei Sektoren aufgeteilt sein und sich in jedem Sektor auch mehr als nur zwei Teilnehmerstationen befinden. In dem dargestellten Ausführungsbeispiel ist die Zahl der Funkzellen Z1, Z2, der Sektoren S11, S12, S21, S22 und der Teilnehmerstationen T11, T112, T121, T211, T221, T222 deshalb so gering gewählt, um nachfolgend das Verfahren zum Verbessern der Übertragungsqualität in dem Funkübertragungssystem überschaubarer darstellen zu können.

Wie die Figur 1 zeigt, gehört zu dem Punkt-zu-Mehrpunkt Funkübertragungssystem auch eine zentrale Steuereinheit SE, welche mit allen Basisstationen BS1, BS2 in Verbindung steht.

Eine während der Planung des Punkt-zu-Mehrpunkt Funkübertragungssystems durchgeführte Interferenzanalyse erfaßt die real auftretenden Interferenzen nicht mit einer gewünschten Genauigkeit, vor allem erfaßt sie nicht solche Interferenzen, die nachträglich durch geographische, Vegetations- oder bauliche Veränderungen innerhalb des Funknetzes auftreten. Eine zuverlässigere und die realen Interferenzverhältnisse innerhalb des Funknetzes erfassende Interferenzanalyse wird mit dem nachfolgend beschriebenen Verfahren durchgeführt. Es handelt sich dabei um eine adaptive Interferenzanalyse, die das Funkübertragungssystem selbst automatisch durchführt. So kann diese Interferenzanalyse z.B. nach jeder Neuinstallation einer Teilnehmerstation oder nach einer Veränderung der Bebauung oder der Vegetation in den Funkzellen oder gar periodisch iterativ wiederholt werden.

Bei der Interferenzanalyse wird zwischen zwei Übertragungsrichtungen unterschieden. Die eine Richtung, nachfolgend als Outboundlink bezeichnet, betrifft die von den Basisstationen BS1, BS2 an Teilnehmerstationen ausgesendeten Signale. Die andere Richtung, nachfolgend als Inboundlink bezeichnet, betrifft Signale, die von Teilnehmerstationen an ihre zugehörigen Basisstationen ausgesendet werden. Hier seien nun beispielhaft einige Interferenzsituationen beim Outboundlink und beim Inboundlink dargestellt. Sendet z.B. in einem Outboundlink die Basisstation BS1 im Sektor S11 an die Teilnehmerstation T111 ein Datensignal in einem bestimmten Frequenzkanal aus, so kann es sein, daß bis zu dieser Teilnehmerstation T111 ein von der Basisstation BS2 der Nachbarfunkzelle Z2 ausgesendetes Signal gelangt, welches diese Basisstation BS2 im Sektor S21 an die Teilnehmerstation T211 im selben Frequenzkanal ausgesendet hat. Dieses von dem Sektor S21 der Basisstation BS2 ausgehende Signal verursacht also bei der Teilnehmerstation T111 eine Interferenz. Umgekehrt kann auch bei einen Inboundlink, wenn z.B. die Teilnehmerstation T121 im Sektor S12 an die Basisstation BS1 ein Datensignal aussendet, dieselbe Basisstation BS1 ein im selben Frequenzkanal z.B. von der Teilnehmerstation T222 im Sektor S22 der Basisstation BS2 der Funkzelle Z2 ausgesendetes Signal empfangen; dieses Signal stellt bei der Basisstation BS1 eine Interferenz dar. So können natürlich im Inboundlink und im Outboundlink von mehreren Teilnehmerstationen oder Basisstationen Interferenzen erzeugt werden.

Um alle möglicherweise auftretenden Interferenzen erfassen zu können, werden von allen in dem Funkübertragungssystem vorhandenen Signalpfaden die Dämpfungen bestimmt. Dazu bedient man sich eines Testkanals mit einer fest vorgegebenen Frequenz und einem konstanten Leistungspegel. Dieser Testkanal wird zeitlich nacheinander von jedem Sektor S11, S12, S21, S22 aller Basisstationen BS1, BS2 ausgesendet. Alle in den Funkzellen Z1, Z2 vorhandenen Teilnehmerstationen T111, T112, T121, T211, T221, T222 empfangen den von den jeweiligen Sektoren S11, S12, S21, S22 der Basisstationen BS1, BS2 ausgesendeten Testkanal. Aus der von den einzelnen Teilnehmerstationen gemessenen Empfangsleistung und der bekannten, im Testkanal mitübertragenen Information über die Sendeleistung ermittelt jede Teilnehmerstation die zugehörigen Signalpfad-Dämpfungen. Die von allen Teilnehmerstationen ermittelten Signalpfad-Dämpfungen werden von den Teilnehmerstationen über die Basisstationen an die zentrale Steuereinheit SE übermittelt. In der zentralen Steuereinheit SE werden zweckmäßigerweise alle Signalpfad-Dämpfungen in einer Matrix abgelegt, wie sie die Figur 2 zeigt. Sie verdeutlicht, daß zwischen jeder Teilnehmerstation T111 .... T222 und jedem Sektor S11 ... S22 eine Signalpfad-Dämpfung existiert, wobei die schraffierten Felder die Signalpfade zwischen den Teilnehmerstationen und ihren zugehörigen Basisstations-Sektoren kennzeichnen, für die keine Dämpfungsmessung vorgenommen werden muß. Denn für die später zu ermittelnden Interferenzen sind nur die Signalpfade zwischen den Teilnehmerstationen und nicht zugehörigen fremden Sektoren von Interesse.

Anstatt den Testkanal von den Basisstationen BS1, BS2 in den jeweiligen Sektoren S11 ... S22 auszusenden, kann der Testkanal auch umgekehrt zeitlich nacheinander von jeder einzelnen Teilnehmerstation T111 ... T222 ausgesendet und von den Sektoren der Basisstationen BS1, BS2 empfangen und daraus die entsprechende Signalpfaddämpfung berechnet werden.

Damit jede Teilnehmerstation T111 ... T222, wenn sie die einzelnen Signalpfad-Dämpfungen bestimmt, weiß, von welchem Sektor S11 ... S22 der Basisstation BS1, BS2 der Testkanal ausgesendet worden ist, wird mit dem Testkanal neben der Information über die Sendeleistung auch noch eine Kennung der Basisstation BS1, BS2 und dem Sektor S11 ... S22, von dem der gerade empfangene Testkanal ausgesendet worden ist, übertragen. Da unter Umständen auf einigen Signalpfaden der Testkanal von einzelnen Teilnehmerstationen aufgrund seiner großen Dämpfung nicht demoduliert werden kann, ist es zweckmäßig, den Testkanal in einem allen Teilnehmerstationen T111 ... T222 und allen Sektoren S11 ... S22 der Basisstation BS1, BS2 bekannten Zeitraster auszusenden. Dazu muß allen Teilnehmerstationen und allen Sektoren der Basisstationen ein synchronisierter Takt vorliegen.

Wegen möglicher frequenzselektiver Fadings, welche natürlich auch den schmalbandigen Teskanal erfassen können, ist es zweckmäßig, den Testkanal mindestens einmal wiederholt mit einer anderen Frequenz auszusenden.

Die bereits erwähnte zentrale Steuereinheit SE übernimmt die Steuerung für das Aussenden des Teskanals und die anschließende Zusammenstellung aller Signalpfad-Dämpfungen.

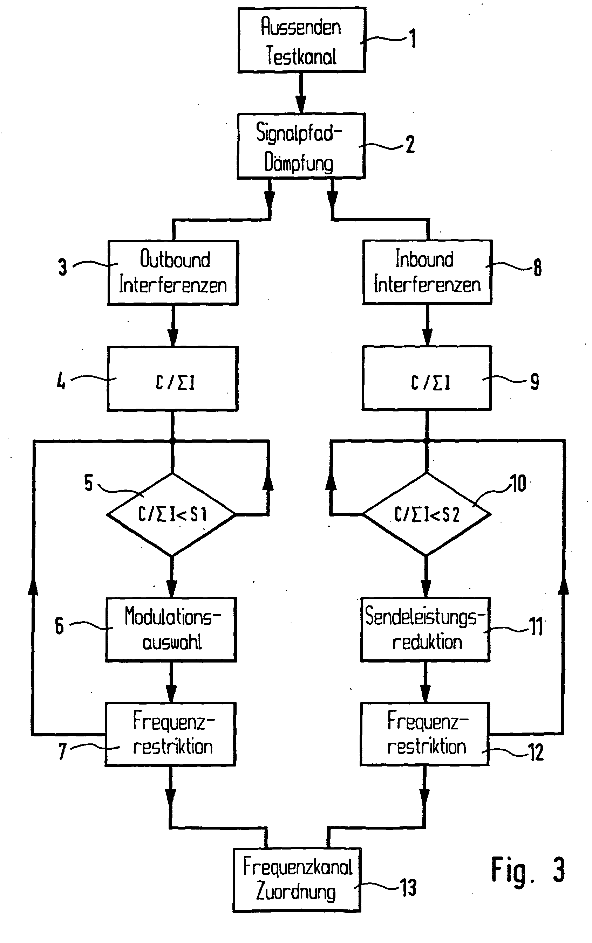

In der Figur 3 ist ein Flußdiagramm dargestellt, nach dem die zentrale Steuereinheit arbeitet. Die beiden Verfahrensschritte 1 und 2 wurden bereits vorangehend beschrieben.

Nachdem die Matrix für die Sinalpfad-Dämpfüngen vollständig vorliegt, werden zunächst für den Outboundlink die Interferenzen von der Steuereinheit SE ermittelt. Die zu jedem Signalpfad gehörende Interferenz wird folgendermaßen berechnet. Zum Beispiel verursacht ein vom Sektor S12 der Basisstation BS1 ausgesendetes Signal bei der Teilnehmerstation T111 im Sektor S11 eine Interferenz, die aus dem Produkt zwischen der von der Basisstation BS1 im Sektor S12 ausgesendeten Nutzsignalleistung und der Signalpfad-Dämpfung zwischen dem Sektor S12 und der Teilnehmerstation T111. Da die zentrale Steuereinheit SE sowohl die Signalpfad-Dämpfung als auch die Sendeleistung des von der Basisstation BS1 im Sektor S12 gesendeten Nutzsignals kennt, kann sie dieses Produkt berechnen. So kann sie zu jeder Signalpfad-Dämpfung die zugehörige Interferenz ermitteln und die Interferenzen aller Signalpfade in einer Matrix nach dem Muster der Figur 2 ablegen.

Im nächsten Verfahensschritt 4 wird für jede Teilnehmerstation T111 ... T222 der Träger-Störabstand C/ΣI ermittelt. Dabei ist C die Leistung des von der betreffenden Teilnehmerstation empfangenen Nutzsignals, das von der Basisstation in dem Sektor, in dem sich die betreffende Teilnehmerstation befindet, ausgesendet worden ist. ΣI ist die Summe aller Interferenzen, welche alle anderen Basisstations-Sektoren beim Aussenden der jeweiligen Nutzsignale bei der betreffenden Teilnehmerstation verursachen. Die Empfangsleistung einer jeden Teilnehmerstation ermittelt die zentrale Steuereinheit SE aus den Signalpfad-Dämpfungen und der Sendeleistung der betreffenden Signale. Aus den im vorherigen Verfahrensschritt 3 ermittelten Interferenzen bildet die zentrale Steuereinheit SE zu jeder einzelnen Teilnehmerstation die Summe ΣI.

Nun wird im Verfahrensschritt 5 für jede Teilnehmerstation T111 ... T222 eine Schwellwertbetrachtung für den Träger-Störabstand C/ΣI. durchgeführt. Liegt der Träger-Störabstand C/ΣI oberhalb einer Schwelle S1 (von z.B. 21 dB), so sind die Interferenzen so schwach, daß keine Maßnahmen zur Reduktion der Interferenzen durchgeführt werden müssen. In diesem Fall führt der Ausgang des Blocks 5 auf den Eingang zurück, so daß der Träger-Störabstand für die nächste Teilnehmerstation mit der Schwelle S1 verglichen werden kann. Liegt allerdings der Träger-Störabstand unterhalb der Schwelle S1, so wird für den zugehörigen Sektor der Basisstation ein robusteres Modulationsverfahren ausgewählt. Folgende Auswahl von Modulationsverfahren und Coderaten könnte zur Verfügung stehen: QPSK mit der Coderate 1/2, QPSK mit der Coderate 3/4, QPSK mit der Coderate 7/8, 8 PSK mit der Coderate 2/3, 16 PSK mit der Coderate 3/4. Von der erstgenannten Modulationsart bis zur letztgenannten nimmt die Robustheit der Modulation ab, allerdings die Bandbreiteneffizienz zu. Es ist natürlich wünschenswert eine Modulationsart und Coderate mit einer möglichst hohen Bandbreiteneffizienz zu verwenden. Wenn allerdings der Träger-Störabstand das nicht zuläßt, wird auf eine Modulationsart und Coderate mit größerer Robustheit zurückgegriffen.

Sollte auch der Übergang auf eine robustere Modulationsart im Verfahrensschritt 6 nicht zu einer gewünschten Übertragungsqualität führen, so wird im Verfahrensschritt 7 eine Frequenzrestriktion durchgeführt. Diese Frequenzrestriktion kann auch alternativ zu der Modulationsauswahl durchgeführt werden. Frequenzrestriktion heißt in diesem Zusammenhang, daß für den dominanten Interferenz-Signalpfad ein anderer Frequenzkanal ausgewählt wird. Danach kann eine neue Ermittlung des Träger- Störabstandes erfolgen und dann bei dem Signalpfad mit der nächst größten Interferenz eine Verschiebung des Frequenzkanals vorgenommen werden. Dieser Prozeß wird solange fortgeführt, bis der Träger-Störabstand die Schwelle S1 überschreitet. Die sich hieraus ergebende Frequenzkanalverteilung legt die Steuereinheit SE zweckmäßigerweise in einer eigenen Frequenzmatrix ab.

Parallel oder nach der Interferenzanalyse für den Outboundlink werden die Interferenzen für den Inboundlink im Verfahrensschritt 8 ermittelt. Die Interferenz, welche eine Teilnehmerstation mit ihrem Sendesignal in einem anderern Sektor einer Basisstation hervorruft, ergibt sich aus dem Produkt der Sendeleistung der Teilnehmerstation und der Dämpfung, die im Verfahrensschritt 2 für den Signalpfad zwischen dem betreffenden Sektor und der Teilnehmerstation ermittelt worden ist. Da die zentrale Steuereinheit SE alle Signalpfad-Dämpfungen in der Dämpfungsmatrix vorliegen hat und auch die Sendeleistung der einzelnen Teilnehmerstationen kennt oder zumindest eine realistische Annahme dazu machen kann, ist sie in der Lage, für alle Signalpfade die Interferenzen zu berechnen. Zweckmäßigerweise legt sie die ermittelten Interferenzen in einer eigenen Matrix ab.

Im Verfahrensschritt 9 wird der Träger-Störabstand C/ΣI für alle Sektoren der Basisstationen ermittelt. C ist die Leistung eines von einem Sektor einer Basisstation empfangenen Nutzsignals, das von einer zu dem Sektor gehörenden Teilnehmerstation ausgesendet worden ist. ΣI ist die Summe aller sich bei dem betreffenden Sektor auswirkenden Interferenzen der anderen sich nicht in dem Sektor befindenden Teilnehmerstationen.

Im Verfahrensschritt 10 wird, wie schon beim Outboundlink, der Träger-Störabstand für jeden Sektor mit einer Schwelle S2 verglichen. Ist der Stör-Trägerabstand größer als die Schwelle S2 (von z.B. 21dB), so brauchen keine Maßnahmen ergriffen zu werden, mit denen Interferenzen reduziert werden. Liegt aber der Träger-Störabstand unterhalb der Schwelle S2 wird im Verfahrensschritt 11 bei der Teilnehmerstation, die die stärkste Interferenz in dem Sektor erzeugt, die Sendeleistung reduziert. Auch bei weniger stark störenden Teilnehmerstationen kann die Sendeleistung reduziert werden bis sich ein Träger-Störabstand einstellt, der oberhalb der Schwelle S2 liegt.

Zusätzlich oder alternativ zu der Sendeleistungsreduktion kann im Verfahrensschritt 12 auch eine Frequenzrestrektion durchgeführt werden, wie sie im Zusammenhang mit dem Out-Boundlink bereits beschrieben worden ist. Bei der Sendeleistungsreduktion und der Frequenzrestriktion brauchen solche Signalpfade nicht mehr berücksichtigt zu werden, für die in der Frequenzmatrix bei der Interferenzanalyse im Outboundlink bereits eine Frequenzänderung vorgenommen worden ist. Denn diejenigen Signalpfade, für die zuvor schon eine Frequenzrestriktion für den Outboundlink durchgeführt worden ist, um deren Interferenz zu unterdrücken, können wegen der Reziprozität der Übertragung beim Inboundlink ebenso keine Interferenzen mehr bilden.

Nachdem die oben beschriebene Interferenzanalyse sowohl für den Outboundlink als auch für den Inboundlink durchgeführt worden ist, werden schließlich im Verfahrensschritt 13 unter Berücksichtigung der für die Reduktion der Interferenzen erforderlichen Frequenzrestriktionen allen Teilnehmerstationen und Sektoren der Basisstationen Frequenzkanäle für die Datenübertragung zugewiesen.

Das vorangehend beschriebene Verfahren läßt sich nicht nur bei Punkt-zu-Mehrpunkt Funkübertragungssystemen anwenden die mit Vielfachzugriff im Frequenzmultiplex (FDMA) arbeiten, sondern auch bei Systemen mit Vielfachzugriff im Zeitmultiplex (TDMA) im Codemultiplex (CDMA) oder im Raummultiplex (SDMA) anwenden.

## Patentansprüche

1. Verfahren zum Verbessern der Übertragungsqualität in einem Punkt-zu-Mehrpunkt Funkübertragungssystem, bestehend aus mindestens einer Basisstation (BS1, BS2) und mehreren Teilnehmerstationen (T111, T112, T121, T211, T221, T222), wobei die zu einer jeden Basisstation (BS1, BS2) gehörende Funkzelle (Z1, Z2) aus einem oder mehreren Sektoren besteht und die Basisstation (BS1, BS2) für jeden einzelnen Sektor (S11 ... S22) eine Sende-/Empfangseinrichtung aufweist, zwischen der und der in dem Sektor (S11 ... S22) vorhandenen Teilnehmerstationen (T111 ... T222) Datenaustausch stattfinden kann, **dadurch gekennzeichnet,**
- **daß** zwischen jeder Teilnehmerstation (T111 ... T222) und den Sende-/Empfangseinrichtungen all derjenigen Sektoren (S11 ... S22), die Interferenzen bei der betreffenden Teilnehmerstation (T111 ... T222) verursachen können, ein Testkanal übertragen wird,
- **daß** für jeden Signalpfad zwischen den einzelnen Teilnehmerstationen (T111 ... T222) und Sektoren (S11 ... S22) aus der Sende- und der Empfangsleistung des Testkanals die Dämpfung ermittelt wird,
- **daß** für jede Teilnehmerstation (T111 ... T222) aus allen dazu ermittelten Signalpfad-Dämpfungen ein Träger-Störabstand bestimmt wird
- und **daß**, wenn der Träger-Störabstand für eine Teilnehmerstation (T111 ... T222) unterhalb einer vorgebbaren Schwelle (S1) liegt, die Modulation für das zwischen der betreffenden Teilnehmerstation und dem zugehörigen Sektor (S11 ... S22) übertragene Datensignal in eine robustere Modulationsart verändert wird und/oder zumindest bei dem Sektor (S111 ... S222), der die größte Interferenz für die betreffende Teilnehmerstation (T111 ... T222) verursacht, ein Sendesignalträger auf einen anderen Frequenzkanal umgeschaltet wird.

2. Verfahren nach Anspruch 1, **dadurch gekennzeichnet, daß** für jeden Sektor (S11 ... S22) aus allen dazugehörenden Signalpfad-Dämpfungen ein Träger- Störabstand bestimmt wird und daß, wenn der Träger-Störabstand für einen Sektor (S111 ... S22) unterhalb einer vorgebbaren Schwelle (S2) liegt, zumindest bei der Teilnehmerstation (T111 ... T222), welche die größte Interferenz für den betreffenden Sektor (S11 ... S22) verursacht, die Sendeleistung reduziert und/oder der Sendesignalträger auf einen anderen Frequenzkanal umgeschaltet wird.

3. Verfahren nach Anspruch 1, **dadurch gekennzeichnet, daß** der Testkanal eine Kennung des ihn aussendenden Sektors (S11 ... S22) bzw. der ihn aussendenden Teilnehmerstation (T111 ... T222) und eine Information über die Sendeleistung enthält.

4. Verfahren nach Anspruch 1, **dadurch gekennzeichnet, daß** der Testkanal von den einzelnen Sektoren (S11 ... S22) oder Teilnehmerstationen (T111 ... T222) in einem vorgebbaren festen Zeitraster ausgesendet wird.

5. Verfahren nach einem der vorhergehenden Ansprüche, **dadurch gekennzeichnet, daß** die Signalpfad-Dämpfungen von einer zentralen Steuereinheit (SE) ermittelt und in einer Dämpfungsmatrix abgelegt werden und daß von der zentralen Steuereinheit (SE) die Träger-Störabstände berechnet und diese der Schwellwertentscheidung unterzogen werden.

6. Verfahren nach einem der vorhergehenden Ansprüche, **dadurch gekennzeichnet, daß** die zentrale Steuereinheit (SE) die sich aus der Interferenzanalyse ergebende Verteilung der Frequenzkanäle für die einzelnen Signalpfade zwischen den Teilnehmerstationen (T111 ... T222) und den ihnen zugehörigen Sektoren (S11 ... S22) in einer Frequenzkanalmatrix ablegt.

7. Verfahren nach Anspruch 1, **dadurch gekennzeichnet, daß** der Testkanal zwischen den Teilnehmerstationen (T111 ... T222) und Sektoren (S11 ... S22) wiederholt mit anderen Trägerfrequenzen übertragen wird.

8. Verfahren nach einem der vorhergehenden Ansprüche, **dadurch gekennzeichnet, daß** es nach jeder Neuinstallation einer Teilnehmerstation oder nach einer Veränderung der Bebauung oder der Vegetation in den Funkzellen oder periodisch wiederholt wird.

9. Anordnung zum Verbessern der Übertragungsqualität in einem Punkt-zu-Mehrpunkt Funkübertragungssystem, bestehend aus mindestens einer Basisstation (BS1, BS2) und mehreren Teilnehmerstationen (T111, T112, T121, T211, T221, T222), wobei die zu einer jeden Basisstation (BS1, BS2) gehörende Funkzelle (Z1, Z2) aus ein oder mehreren Sektoren (S11, S12, S21, S22) besteht und die Basisstation (BS1, BS2) für jeden einzelnen Sektor (S11 ... S22) eine Sende-/Empfangseinrichtung aufweist, zwischen der und den in dem Sektor (S11 ... S22) vorhandenen Teilnehmerstationen (T111 ... T222) Datenaustausch stattfinden kann, **dadurch gekennzeichnet,**
- **daß** eine zentrale Steuereinheit (SE) zwischen jeder Teilnehmerstation (T111 ... T222) und den Sende-/Empfangseinrichtungen all derjenigen Sektoren (S11 ... S22), die Interferenzen bei der betreffenden Teilnehmerstation (T111 ... T222) verursachen können, die Übertragung eines Testkanals veranlaßt,
- **daß** die zentrale Steuereinheit (SE) für jeden Signalpfad zwischen den einzelnen Teilnehmerstationen (T111 ... T222) und Sektoren (S11 ... S22) aus der Sende- und der Empfangsleistung des Testkanals die Dämpfung ermittelt,
- **daß** die zentrale Steuereinheit (SE) für jede Teilnehmerstation (T111 ... T222) aus allen dazu ermittelten Signalpfad-Dämpfungen einen Träger-Störabstand bestimmt
- und **daß**, wenn der Träger-Störabstand für eine Teilnehmerstation (T111 ... T222) unterhalb einer vorgebbaren Schwelle (S1) liegt, die zentrale Steuereinheit (SE) eine Veränderung der Modulation für das zwischen der betreffenden Teilnehmerstation (T111 ... T222) und dem zugehörigen Sektor (S11 ... S22) übertragene Datensignal in eine robustere Modulationsart veranlaßt und/oder zumindest bei dem Sektor (S11 ... S22), der die größte Interferenz für die betreffende Teilnehmerstation (T111 ... T222) verursacht, einen Sendesignalträger auf einen anderen Frequenzkanal umschaltet.

10. Anordnung nach Anspruch 9, **dadurch gekennzeichnet, daß** die zentrale Steuereinheit (SE) für jeden Sektor (S11 ... S22) aus allen dazugehörenden Signalpfad-dämpfungen einen Träger-Störabstand bestimmt und daß sie, wenn der Träger-Störabstand für einen Sektor (S11 ... S22) unterhalb einer vorgebbaren Schwelle (S2) liegt, zumindest bei der Teilnehmerstation (T111 ... T222), welche die größte Interferenz für den betreffenden Sektor (S11 ... S22) verursacht, die Sendeleistung reduziert und/oder den Sendesignalträger auf einen anderen Frequenzkanal umschaltet.

## Claims

1. A method for improving transmission quality in a point-to-multipoint radio transmission system consisting of at least one base station (BS1, BS2) and a plurality of user stations (T111, T112, T121, T211, T221, T222), wherein the radio cell (Z1, Z2) associated with each base station (BS1, BS2) consists of one or more sectors and the base station (BS1, BS2) for each individual sector (S11 ... S22) has a transmitter/receiver device, with an exchange of data being able to take place between it and the user stations (T111 ... T222) present in the sector (S11 ... S22), **characterized in that**
- a test channel is transmitted between each user station (T111 ... T222) and the transmitter/receiver devices of all those sectors (S11 ... S22) which can cause interference with the respective user station (T111 ... T222);
- the attenuation is determined from the transmitted power and the received power of the test channel for each signal path between the individual user stations (T111 ... T222) and sectors (S11 ... S22);
- a carrier signal-to-noise ratio is determined for each user station (T111 ... T222) from all signal path-attenuation values determined therefor;
- and **in that**, when the carrier signal-to-noise ratio for a user station (T111 ... T222) is below a predeterminable threshold (S1), the modulation is changed into a more robust type of modulation for the data signal transmitted between the respective user station and the associated sector (S11 ... S22) and/or a transmission signal carrier is switched to a different frequency channel, at least in the sector (S11 ... S22) which causes the largest interference for the respective user station (T111 ... T222).

2. A method in accordance with claim 1, **characterized in that** a carrier signal-to-noise ratio is determined for each sector (S11 ... S22) from all signal path-attenuation values associated therewith; and **in that** the transmission power is reduced and/or the transmission signal carrier is switched to a different frequency channel when the signal-to-noise ratio for a sector (S111 ... S22) is below a predeterminable threshold (S2), at least for the user station (T111 ... T222) which causes the largest interference for the respective sector (S11 ... S22).

3. A method in accordance with claim 1, **characterized in that** the test channel includes an identification of the sector (S11 ... S22) transmitting it or of the user station (T111 ... T222) transmitting it and information on the transmission power.

4. A method in accordance with claim 1, **characterized in that** the test channel is transmitted from the individual sectors (S11 ... S22) or user stations (T111 ... T222) in a predeterminable fixed time pattern.

5. A method in accordance with any one of the preceding claims, **characterized in that** the signal path-attenuation values are determined by a central control unit (SE) and are stored in an attenuation matrix; and **in that** the carrier signal-to-noise ratios are computed by the central control unit (SE) and are subjected to the threshold decision.

6. A method in accordance with any one of the preceding claims, **characterized in that** the central control unit (SE) stores the distribution - resulting from the interference analysis - of the frequency channels for the individual signal paths between the user stations (T111 ... T222) and the sectors (S11 ... S22) associated therewith in a frequency channel matrix

7. A method in accordance with claim 1, **characterized in that** the test channel between the user stations (T111 ... T222) and sectors (S11 ... S22) is repeatedly transmitted at different carrier frequencies.

8. A method in accordance with any one of the preceding claims, **characterized in that** it is repeated after every new installation of a user station or after a change in the building structure or of the vegetation in the radio cells or it is repeated periodically.

9. An arrangement for improving transmission quality in a point-to-multipoint radio transmission system consisting of at least one base station (BS1, BS2) and a plurality of user stations (T111, T112, T121, T211, T221, T222), wherein the radio cell (Z1, Z2) associated with each base station (BS1, BS2) consists of one or more sectors (S11, S12, S21, S22) and the base station (BS1, BS2) for each individual sector (S11 ... S22) has a transmitter/ receiver device, with an exchange of data being able to take place between it and the user stations (T111 ... T222) present in the sector (S11 ... S22), **characterized in that**
- a central control unit (SE) initiates the transmission of a test channel between each user station (T111 ... T222) and the transmitter/receivers devices of all those sectors (S11 ... S22) which can cause interference in the respective user station (T111 ... T222);
- the central control unit (SE) determines the attenuation for each signal path between the individual user stations (T111 ... T222) and sectors (S11 ... S22) from the transmitted power and the received power of the test channel;
- the central control unit (SE) determines a carrier signal-to-noise ratio for each user station (T111 ... T222) from all signal path-attenuation values determined therefor;
- and **in that**, when the carrier signal-to-noise ratio for a user station (T111 ... T222) is below a predeterminable threshold (S1), the central control unit (SE) initiates a change in the modulation into a more robust type of modulation for the data signal transmitted between the respective user station (T111 ... T222) and the associated sector (S11 ... S22) and/or switches a transmission signal carrier to a different frequency channel, at least in the sector (S11 ... S22) which causes the largest interference for the respective user station (T111 ... T222).

10. An arrangement in accordance with claim 9, **characterized in that** the central control unit (SE) determines a carrier signal-to-noise ratio for each sector (S11 ... S22) from all signal path-attenuation values associated therewith; and **in that** it reduces the transmitted power and/or switches the transmission signal carrier to a different frequency channel when the signal-to-noise ratio for a sector (S111 ... S22) is below a predeterminable threshold (S2), at least for the user station (T111 ... T222) which causes the largest interference for the respective sector (S11 ... S22).

## Revendications

1. Procédé pour améliorer la qualité de transmission dans un système de transmission radio point-multipoint, comprenant au moins une station de base (BS1, BS2) et plusieurs stations clients (T111, T112, T121, T211, T221, T222), dans lequel la cellule radio (Z1, Z2) appartenant à chaque station de base (BS1, BS2) est composée d'un ou plusieurs secteurs, et la station de base (BS1, BS2) pour chaque secteur individuel (S11 ... S22) comprend un système émetteur/récepteur, de manière qu'un échange de données puisse se produire entre ledit système émetteur/récepteur et les stations clients (T111 ... T222) présentes dans le secteur (S11 ... S22), **caractérisé en ce que**
- entre chaque station client (T111 ... T222) et les systèmes émetteurs/récepteurs de tous ceux des secteurs (S11 ... S22) qui peuvent provoquer des interférences dans la station client (T111 ... T222) concernée, on transmet un canal de test,
- pour chaque trajet de signal entre les stations clients individuelles (T111 ... T222), on calcule l'amortissement à partir de la puissance émise et de la puissance reçue du canal de test,
- pour chaque station client (T111 ... T222) on détermine un écart de perturbation de porteuse à partir de tous les amortissements des trajets de signaux calculés pour cette station, et
- quand l'écart de perturbation de porteuse pour une station client (T111 ... T222) tombe au-dessous d'un seuil prédéterminé (S1), la modulation pour le signal de données transmis entre la station client concernée et le secteur associé (S11 ... S22) est modifiée vers un mode de modulation plus robuste, et/ou au moins pour ce qui concerne le secteur (S111 ... S222) qui provoque la plus forte interférence pour la station client (T111 ... T222), une porteuse de signal d'émission est basculée sur un autre canal de fréquence.

2. Procédé selon la revendication 1, **caractérisé en ce que**, pour chaque secteur (S11 ... S22) on détermine un écart de perturbation de porteuse à partir de tous les amortissements des trajets de signaux appartenant à ce secteur, et **en ce que**, si l'écart de perturbation de porteuse pour un secteur (S11... S22) tombe au-dessous d'un seuil prédéterminé (S2), au moins pour ce qui concerne la station client (T111 ... T222) qui provoque la plus forte interférence pour le secteur concerné (S11 ... S22), on réduit la puissance émise et/ou on bascule la porteuse du signal d'émission vers un autre canal de fréquence.

3. Procédé selon la revendication 1, **caractérisé en ce que** le canal de test des secteurs individuels (S11 ... S22) ou des stations clients (T111 ... T222) est émis dans une trame temporelle fixe prédéterminée.

4. Procédé selon la revendication1, **caractérisé en ce que** le canal de test des secteurs individuels (S11 ... S22) ou des stations clients (T111 ... T222) est émis dans une trame temporelle fixe prédéterminée.

5. Procédé selon l'une des revendications précédentes, **caractérisé en ce que** les amortissements des trajets de signaux sont déterminés par une unité de commande centrale (SE) et mémorisés dans une matrice d'amortissement, et **en ce que** l'unité de commande centrale (SE) calcule les écarts de perturbation de porteuse et soumet ceux-ci à la décision vis-à-vis d'un seuil.

6. Procédé selon l'une des revendications précédentes, **caractérisé en ce que** l'unité de commande centrale (SE) mémorise dans une matrice de canaux de fréquence la répartition des canaux de fréquence, résultant de l'analyse des interférences, pour les trajets de signaux individuels entre les stations clients (T111 ... T222) et les secteurs (S11 ... S22) qui leur sont associés.

7. Procédé selon la revendication 1, **caractérisé en ce que** le canal de test entre les stations clients (T111 ... T222) et les secteurs (S11 ... S22) est transmis de façon répétée avec d'autres fréquences porteuses.

8. Procédé selon l'une des revendications précédentes, **caractérisé en ce qu'**il est répété après chaque nouvelle installation d'une station client ou après une modification des constructions ou de la végétation dans les cellules radio, ou encore de façon périodique.

9. Agencement pour améliorer la qualité de transmission dans un système de transmission radio point-multipoint, comprenant au moins une station de base (BS1, BS2) et plusieurs stations clients (T111, T112, T121, T211, T221, T222), dans lequel la cellule radio (Z1, Z2) appartenant à chaque station de base (BS1, BS2) est constituée d'un ou de plusieurs secteurs (S11, S12, S21, S22) et la station de base (BS1, BS2) pour chaque secteur individuel (S11 ... S22) comprend un système émetteur/ récepteur, de sorte qu'un échange de données peut avoir lieu entre ce système émetteur/récepteur et les stations clients (T111 ... T222) présentes dans le secteur (S11 ... S22), **caractérisé en ce que**
- une unité de commande centrale (SE), entre chaque station client (T111 ... T222) et les systèmes émetteurs/récepteurs de tous ceux des secteurs (S11 ... S22) qui peuvent provoquer des interférences dans les stations clients concernées (T111 ... T222), provoque la transmission d'un canal de test,
- pour chaque trajet de signal entre les stations clients individuelles (T111 ... T222) et les secteurs (S11 ... S22), l'unité de commande centrale (SE) calcule l'amortissement à partir de la puissance émise et de la puissance reçue du canal de test,
- pour chaque station client (T111 ... T222), l'unité de commande centrale (SE) détermine un écart de perturbation de porteuse à partir de tous les amortissements des trajets de signaux calculés pour cette station, et
- si l'écart de perturbation de porteuse pour une station client (T111 ... T222) tombe au-dessous d'un seuil prédéterminé (S1), l'unité de commande centrale (SE) provoque une modification de la modulation pour le signal de données transmis entre la station client concernée (T111 ... T222) et le secteur associé (S11 ... S22) vers un mode de modulation plus robuste, et/ou au moins pour ce qui concerne le secteur (S11 ... S22) qui provoque la plus forte interférence pour la station client concernée (T111 ... T222), elle fait basculer une porteuse du signal émis vers un autre canal de fréquence.

10. Agencement selon la revendication 9, **caractérisé en ce que** l'unité de commande centrale (SE) calcule pour chaque secteur (S11 ... S22) un écart de perturbation de porteuse à partir de tous les amortissements des trajets de signaux associés, et si l'écart de perturbation de porteuse pour un secteur (S11 ... S22) tombe au-dessous d'un seuil prédéterminé (S2), au moins pour ce qui concerne la station client (T111 ... T222) qui provoque la plus forte interférence pour le secteur concerné (S11 ... S22), elle réduit la puissance émise et/ou elle bascule la porteuse du signal d'émission vers un autre canal de fréquence.
